# EUROPEAN PATENT APPLICATION

(11) **EP 3 395 217 A1**
(43) Date of publication of application: **31.10.2018**
(21) Application number: 17168738.7
(22) Date of filing: 28.04.2017
(51) Int. Cl.: A47J 37/06

(54) **FOOD SUPPORT FOR AN AIR BASED FRYER AND AIR-BASED FRYER PROVIDED WITH SUCH FOOD SUPPORT**

(71) Applicant: Koninklijke Philips N.V., 5656 AE Eindhoven (NL)
(72) Inventor: SAMONIGG, Gert, 5656 AE Eindhoven (NL); FLOESSHOLZER, Hannes Uwe, 5656 AE Eindhoven (NL)
(74) Representative: de Haan, Poul Erik

(57) **Abstract**

Food support for use in an air-based fryer, comprising an air-permeable bottom for supporting food to be prepared and a mounting structure for detachably mounting the food support in a food preparation chamber of the air-based fryer, such that hot air that in use is circulated in the food preparation chamber can flow through the air-permeable bottom. The air-permeable bottom comprises a peripheral zone having an average air-permeability that is lower than the average air-permeability of the remainder of the bottom. The invention further relates to an air-based fryer equipped with such a food support.

## Description

### FIELD OF THE INVENTION

The present invention relates to a food support for use in an air-based fryer in which food is prepared by means of hot air that is circulated with relatively high speed through and around said food. The invention furthermore relates to an air-based fryer provided with such a food support.

### BACKGROUND OF THE INVENTION

Air-based fryers are known, for instance from WO2007/144432. Typically, they comprise a food preparation chamber and an air-permeable food support for supporting food ingredients to be cooked. A flow of hot air is circulated around and/or through the food ingredients with relatively high speed, providing the heat needed to cook the food. Thus, the food can be cooked in a healthy manner, with no or much less fat compared to conventional deep-fat frying.

Air-based fryers can be used for preparing a large variety of food ingredients. However, with some food ingredients, in particular bulk type food ingredients such as French fries, potato wedges, chicken nuggets and the like, food ingredients located near the perimeter of the food support may cook faster than food ingredients located closer to the center. This may result in overcooking, respectively undercooking of said food ingredients.

### SUMMARY OF THE INVENTION

It is an object of the invention to provide a food support and an air-based fryer with such a food support that overcome or at least alleviate the aforementioned problem.

The object of the present invention is achieved by the subject-matter of the independent claims. Further embodiments are defined in the dependent claims.

According to the present invention, there is provided a food support, comprising an air-permeable bottom and a mounting structure for detachably mounting the food support in a food preparation chamber of an air-based fryer, such that air that in use is circulated in the food preparation chamber can flow through the air-permeable bottom. In particular, the food support may be spaced from a bottom wall and surrounding side walls of the food preparation chamber, to allow air to be circulated around the food support and through air-permeable portions thereof, in particular the bottom. The bottom may comprise a peripheral zone, that is, a ring shaped zone extending along a perimeter of the bottom, and a centre zone, that is, the remainder of the bottom that is surrounded by said peripheral zone. The peripheral zone may have an average air-permeability that is lower than the average air-permeability of the centre zone. The average air-permeability of the peripheral zone may for instance be twice or three times less than the average air-permeability of the centre zone.

As an advantage, more homogenous cooking results can be obtained. Without wanting to be bound to any theory, this may be explained as follows. When bulk type food ingredients are poured onto a food support, the food ingredients tend to form an irregular pile with an inhomogeneous density. Typically, the density will be highest in the center and decrease towards the periphery of the pile. In addition, the height of the pile may be higher in the center than near the periphery. Both phenomena will cause the flow resistance through a central region of the pile to be higher than through a peripheral region. Air tends to follow the path of least resistance. Therefore, air that in use is circulated upward through a central region of the pile may partly meander sideward, towards and through the peripheral region where the flow resistance is lower. As a result, more air may flow through the peripheral region than through the central region. More particularly, the total volume of air flowing through the peripheral region may have a "direct" air component and an "indirect" air component. The direct air component is formed by air that is circulated upward through a peripheral zone of the food support located directly underneath the peripheral region. The indirect air component is formed by air that initially is circulated upward through a central zone of the food support but once it has entered the food pile will follow a path of least resistance towards the periphery of the pile. Thus, food ingredients located in the peripheral region will be exposed to more air and heat transfer, causing them to be cooked faster.

The bottom configuration according to the present invention helps to counteract aforementioned flow effects. More particularly, by reducing the air-permeability of the peripheral zone, less air will flow through said zone along food ingredients located directly above said zone. In other words, the aforementioned direct air component through the peripheral region of the food pile may be reduced, whereas the indirect air component may remain substantially the same. Thus, the volume of air circulated upward through the bottom may become more evenly distributed over the food ingredients in the pile, resulting in a more homogeneous heat transfer and thus in more homogeneous cooking results.

In this description distinction is made between the air-permeability and the average air-permeability of a zone. The air-permeability is defined as the volume of air passing per surface area unit (e.g. per mm² or cm²) per time unit (e.g. per second or per minute) at a specific pressure (e.g. atmospheric pressure or the operating pressure in the air-based fryer). The average air-permeability is defined as the volume of air passing through an entire zone of the bottom (i.e. the peripheral zone or centre zone), as measured over the entire surface area of said zone, per time unit (e.g. per second or per minute) and at a specific pressure (e.g. atmospheric pressure or the operating pressure in the air-based fryer).

In some embodiments, the air-permeability within the peripheral zone may vary across said zone. For instance, it may vary in radial direction, with the air-permeability being lowest at the outer perimeter of the zone and gradually increasing towards the inner perimeter of the zone. In this way, the air-permeability of the peripheral zone may even more accurately match the flow resistance through the food ingredients supported by said peripheral zone, which flow resistance may gradually increase from the outer perimeter of the food support towards the centre of the food support.

In some embodiments, the air-permeability within the peripheral zone may be constant in circumferential direction. This may enable the air-permeability of the peripheral zone to match the flow resistance through the food ingredients supported on said peripheral zone, since typically, the distribution of food ingredients on the peripheral zone will be substantially constant in circumferential direction and thus the flow resistance through said food ingredients will be substantially constant as well in said circumferential direction.

In some embodiments, the air-permeability may be substantially constant across the entire peripheral zone. That is, the air-permeability at any point within the peripheral zone is equal to the average air-permeability of the zone. Such a peripheral zone may be easy to manufacture. Also, with such embodiment, the food support can be placed in the food preparation chamber in any rotational orientation, thus enhancing the ease of use.

Similar considerations apply to the air-permeability of the centre zone, that is, the air-permeability of the centre zone may be constant across the zone or vary, in radial and/or circumferential direction.

In some embodiments, the air-permeability at any point in the peripheral zone is lower than the average air-permeability of the centre zone.

In some embodiments, the bottom may be provided with a plurality of openings. The bottom may for instance be made, at least partly, of a grid material or a mesh material. Alternatively or additionally it may at least partly be made of perforated sheet material. The number, shape, dimensions and/or pattern of the openings may differ per zone and/or within a zone, in order to provide the zone with desired air-permeability characteristics. The openings may for instance be square, rectangular, hexagonal or have a regular polygonal shape. In some embodiments, the openings may be of uniform shape and/or dimensions.

In some embodiments, the dimensions of the openings may be less than 6 mm by 6 mm. This may help to prevent smaller food ingredients from inadvertently falling through the openings or getting jammed therein.

In some embodiments the dimensions of the openings may be larger than 2 mm by 2 mm. This is in particular advantageous for the cleanability of the bottom, as smaller openings tend to make the bottom more difficult to clean.

In some embodiments, the peripheral zone may have an openness factor of less than 30%, preferably less than 20%, more preferably less than 10%.

In this description, the openness factor of a zone is defined as the sum of the surface areas taken up by all openings in said zone, expressed as percentage of the total surface area of said zone.

In some embodiments, the center zone may have an openness factor of at least 50%. Preferably, the openness factor of the center zone is as large as possible, e.g. more than 70%, or more than 80%. In general, the higher the openness factor, the lower the flow resistance through said zone, which may result in faster, more efficient and more homogeneous cooking, with less power. Also, cleaning of the zone may be easier.

In some embodiments, the peripheral zone may have an openness factor of zero. In other words, the peripheral zone may be air-impermeable. As an advantage, such embodiments may be easy to manufacture and easy to clean, while still contributing to a more homogeneous cooking result.

In some embodiments, the peripheral zone may have a width that is more than 3% of the total width of the bottom, preferably more than 4%, more preferably more than 5%. Test results have shown that with such width percentages, good homogeneous cooking results can be obtained.

In this description the width of the peripheral zone is defined as the smallest distance between the outer perimeter and the inner perimeter of the peripheral zone. The width may vary along the periphery of the bottom. It may for instance be larger near corners of the bottom. Therefore, where in this description reference is made to "the" width of the peripheral zone, unless explicitly stated otherwise, this should be understood to mean the average width or the width as featured by a largest part of said peripheral zone.

In some embodiments, the width of the peripheral zone may be smaller than 8%, preferably smaller than 7% and more preferably smaller than 6% of the total width of the bottom. This may in particular be advantageous if the food support is also intended to be used with food types other than bulk type foods, for instance meat such as a steak. For these other food types, there may be less need for a peripheral zone of lower air-permeability. These other food types, when mounted on the food support, may block at least part of the openings in the center zone. Therefore, sufficient openings should remain unblocked in order to enable sufficient air to flow through the food support and around the food. If the width of the peripheral zone becomes too large, the air flow through the food support may become too low at some locations, which may result in some parts of the food not being reached.

Advantageously, the width of the peripheral zone and the air-permeability of the zones are tuned to one another such that the total through flow surface area of the food support (that is, the total surface area through which air can flow) is large enough to handle the air flow volume that in use is circulated in the air-based fryer so that the food support does not unnecessarily restrict the air flow circulation, but merely re-distributes it as it flows through the bottom so as to have a more homogeneous flow through the food itself.

In some embodiments, the food support may be formed as a food basket, with the bottom being surrounded, at least partly, by a wall segment. The width of the peripheral zone may be selected in dependence of the height of this wall segment. More particularly, the width of the peripheral zone may measure between about 5% and about 50% of the height of the wall segment. More particularly, there may be an inverse relationship between the width and the height, where the width of the peripheral zone is selected to be smaller as the height of the wall segment increases.

Applicant has recognized that the presence of a wall segment and the height of this wall segment may have an influence on the flow characteristics through the food ingredients in the basket. More particularly, they may have an effect on the extent of the difference in flow resistance between the peripheral region and center of the food pile. Applicant has observed that this difference may be maximum with food piles of low height and may decrease as the height of the pile increases. Without wanting to be bound to any theory, this may be explained as follows. In food piles of relatively low height, typically there will only be a few overlapping layers of food ingredients in the peripheral region of the pile. Thus, any gaps between these food ingredients will have a considerable lowering effect on the flow resistance. As the pile grows taller, the peripheral region will include more overlapping layers of food ingredients which will cause the influence of the gaps on the flow resistance to become increasingly smaller. Applicant has recognized that the wall segment, in particularly its height, may be indicative for the height of the pile that in use may be arranged in the food support. If the wall segment is of modest height, the food pile is likely to be of modest height as well, and the flow resistance of the peripheral zone may be considerably lower than in the center of the pile. In such case, the bottom of the food support may benefit from a relatively wide peripheral zone with low air-permeability. For instance, if the peripheral zone has a zero openness factor so is air-impermeable, the width of the peripheral zone may for instance be 50% of the height of the wall segment or 20 mm, whichever is largest. If the peripheral zone is air-permeable, the aforementioned values may even be somewhat higher. As the height of the wall segment grows taller, the food pile is likely to be taller as well, resulting in more homogeneous flow properties. In such case, the bottom of the food support may benefit from a smaller peripheral zone. The width of such peripheral zone may for instance be 5% of the height of the wall segment or 8 mm, whichever is smallest.

In some embodiments, the peripheral zone or at least an upper surface thereof may be inclined downward towards the center of the food support. This is in particular advantageous in embodiments where the peripheral zone has a very low or zero openness factor. Liquid such as water and/or fat, or food crumbs or the like materials that during use may be released by the food ingredients may fall down on the peripheral zone. Thanks to the inclined upper surface, these materials may be guided through gravity towards the center of the food support where they may be discharged from the food support through openings in the central zone.

In some embodiments, the air-permeable bottom or parts thereof may be detachably connected to the food support. In such case, a single food support may be combined with a series of bottoms, each having their own air-permeability characteristics, which may for instance be optimized for a specific type of food ingredients and/or for a specific height of the pile of food ingredients that is intended to be cooked in the air-based fryer.

In some embodiments, the peripheral zone may be integrally formed with the remainder of the air-permeable bottom.

In some embodiments, the peripheral zone may be provided as a separate component. The peripheral zone may for instance be formed as an insert that may be mountable or connectable to the air-permeable bottom, so as to extend along a top or lower side thereof. Thus, a single food support and/or a single air-permeable bottom may be combined with a series of peripheral zone inserts, each insert having its own specific air-permeability characteristics, which may for instance be optimized for a specific type of food ingredients and/or for a specific height of the pile of food ingredients that is intended to be cooked in the air-based fryer. With such peripheral zone inserts it is further possible to retrofit existing food supports with a peripheral zone according to the invention. The peripheral zone inserts may be provided with an upper surface that is inclined downwards from an outer perimeter to an inner perimeter of the insert.

In some embodiments, the air-permeability or openness factor of the peripheral zone and/or the center zone may be adjustable. The bottom may for instance comprise overlapping segments, each having a specific pattern of openings. By moving these segments relative to each other, the openings in these patterns may become more or less aligned, thus increasing, respectively decreasing the air-permeability or openness factor of the bottom. Thus it may be possible to adjust the air-permeability of the peripheral zone and/or the center zone of the bottom. Alternatively, or additionally, it may be possible to adjust the width of the peripheral zone.

The invention further relates to an air-based fryer, provided with a food support according to the invention, wherein the total through flow surface area of the food support is at least equal to the through flow surface area of a smallest cross section of the air circulation channel in said air-based fryer. Thus it is prevented that the food support restricts the air flow circulation in the air-based fryer.

These and other aspects of the invention will be apparent from and elucidated with reference to the embodiments described hereinafter.

### BRIEF DESCRIPTION OF THE DRAWINGS

Embodiments of the invention will now be described, by way of example only, with reference to the accompanying drawings, in which:
Fig. 1 schematically shows an embodiment of an air-based fryer in cross sectional view;
Fig. 2 schematically shows a further embodiment of an air-based fryer in cross sectional view; and
Figs. 3 to 7 show embodiments of a food support according to the invention, in top plan view.

### DETAILED DESCRIPTION OF THE EMBODIMENTS

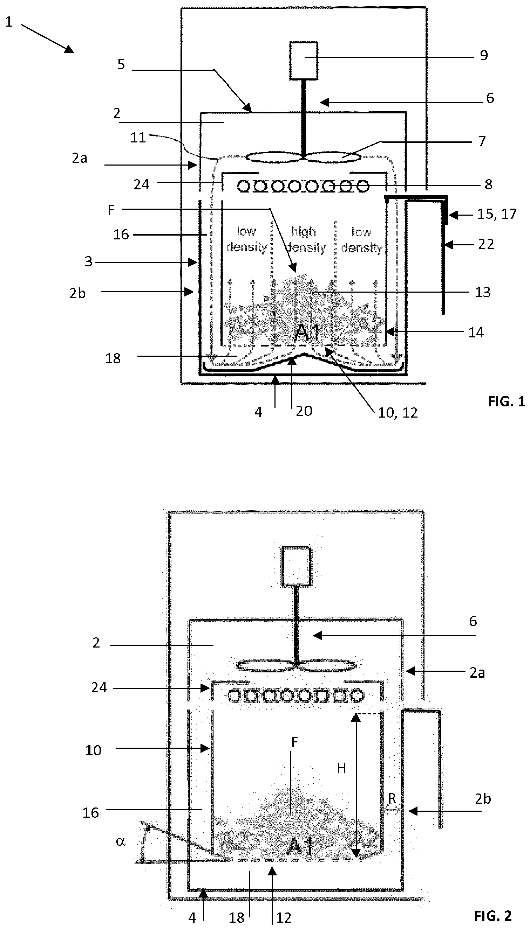

Figs. 1 and 2 each schematically show an air-based fryer 1 in cross-sectional view. The air-based fryer 1 comprises a food preparation chamber 2 with sidewalls 3, a bottom wall 4 and a top wall 5. A food support 10 is disposed within the food preparation chamber 2 to support food F to be cooked.

The food support 10 comprises an air-permeable bottom 12. It may further comprise a wall segment 14 that may at least partly surround the air-permeable bottom 12. The wall segment 14 may be closed or air-permeable.

A mounting structure 15 may be provided to detachably mount the food support 10 in the food preparation chamber 2. The mounting structure 15 may be designed to allow air to circulate all around the food support 10 in mounted condition. Advantageously, the mounting structure 15 is designed such that in mounted condition a bottom gap 18 is provided between the air-permeable bottom 12 and the bottom wall 4 of the food preparation chamber 2. Furthermore, a lateral gap 16 may be provided between the sidewalls 3 of the preparation chamber 2 and the perimeter of the air-permeable bottom 12 and, where present, the wall segment 14. The bottom gap 18 and lateral gap 16 may together form part of an air circulation channel. Advantageously, the mounting structure 15 is designed to minimize obstruction of said air circulation channel.

In some embodiments, as illustrated in Fig. 1, the mounting structure 15 may include a handle 17, with which the food support 10 may be suspended from a sidewall 3 of the food preparation chamber 2. The handle 17 may further advantageously allow a user to easily remove the food support 10 from the food preparation chamber 2.

The air-based fryer 1 further comprises an air circulation system 6 and an air heater 8 for circulating hot air in the food preparation chamber 2. In some embodiments, as illustrated in Figs. 1 and 2, the air heater 8 may be disposed above the food support 10. In such case, the air heater 8 may radiate heat directly to the food ingredients F in addition to heating the air in the food preparation chamber 2.

In some embodiments, as illustrated in Figs. 1 and 2, the air circulation system 6 may include a fan 7 and a motor 9 for driving said fan 7. The air circulation system 6 may be disposed above the food support 10. In some embodiments, as illustrated in Figs. 1 and 2, the air circulation system 6 may be disposed above the air heater 8.

The air circulation system 6 is designed to pass hot air through the air-permeable bottom 12 of the food support 10 such that food F disposed thereon will be prepared by a through-streaming of hot air.

In some embodiments, as illustrated by the arrows 13 in Fig. 1, the air circulation system 6 may be designed to draw air upward through the food support 10. The air may subsequently be passed along the air heater 8 to heat the air. The air heater 8 may be any appropriate heating source, such as an electric heater which can heat air to, for example, between roughly 100 °C and 250 °C by controlling the power supplied to the air heater.

In some embodiments, as illustrated by the arrows 11 in Fig. 1, the air circulation system 6 may be designed to pass hot air downward along an inner surface of the food preparation chamber 2 and an outer surface of the food support 10. In some embodiments, the lateral gap 16 and bottom gap 18 may together from an air circulation channel for guiding the flow of hot air from the air circulation system 6 to the bottom 12 of the food support 10.

In some embodiments, as illustrated in Fig. 2, the bottom wall 4 of the food preparation chamber 2 may be flat. In some embodiments, as illustrated in Fig. 1, the bottom wall 4 may be provided with an air guide member 20 configured to direct the hot air flow towards and/or through the air-permeable bottom 12 of the food support 10.

In some embodiments, the air guide member 20 may have a substantially conical, or frusto-conical outer contour. In some embodiments, not shown, the air guide member 20 may comprises ribs or arms. The air guide member 20 may be integrally formed in the bottom wall 4 of the food preparation chamber or be provided as a separate insert, as illustrated in Fig. 1.

In some embodiments, as illustrated in Figs. 1 and 2, a deflector plate 24 may be provided in an upper part of the food preparation chamber 2, to further enclose a volume enclosed by the food support 10, and to help guiding air from the air circulation system 6 around the food support into the air circulation channel as may be formed by the lateral gap 16 and bottom gap 18.

In some embodiments, the food preparation chamber 2 may comprise an upper section 2a and a lower section 2b, separable from each other to enable access into the food preparation chamber 2. In some embodiments, the lower section 2b may be arranged stationary and the upper section 2a may be releasably or hingedly arranged, e.g. in the form of a lid. In some embodiments, the upper section 2a may be arranged stationary and the lower section 2b may be releasably arranged, e.g. in the form of a drawer. In such case, the lower section 2b may comprise a handle 22 to aid removal of the lower section 2b from the air-based fryer 1, as illustrated in Figs. 1 and 2.

Optionally, the air-based fryer 1 may comprise a vent (not shown), defining an air outlet from the food preparation chamber 2 to outside the air-based fryer 1.

In use, a variety of food types may be prepared in the air-based fryer 1. In case where the food is a bulk type of food, the individual food ingredients F may form a pile as illustrated in Figs. 1 and 2, with the height, density and consequently the flow resistance being highest in the centre of the pile and decreasing towards the periphery. Advantageously, the bottom 12 of the food support 10 is designed to have a flow resistance that reversely mirrors the flow resistance of the pile, so is lowest in the centre A1 and increases towards the periphery A2. Thus, the total flow resistance of the bottom 12 and pile together may be more or less constant over the entire cross section of the food support 10, resulting in a more homogeneous air flow through the food support 10 and, ultimately, in more homogeneous cooking results.

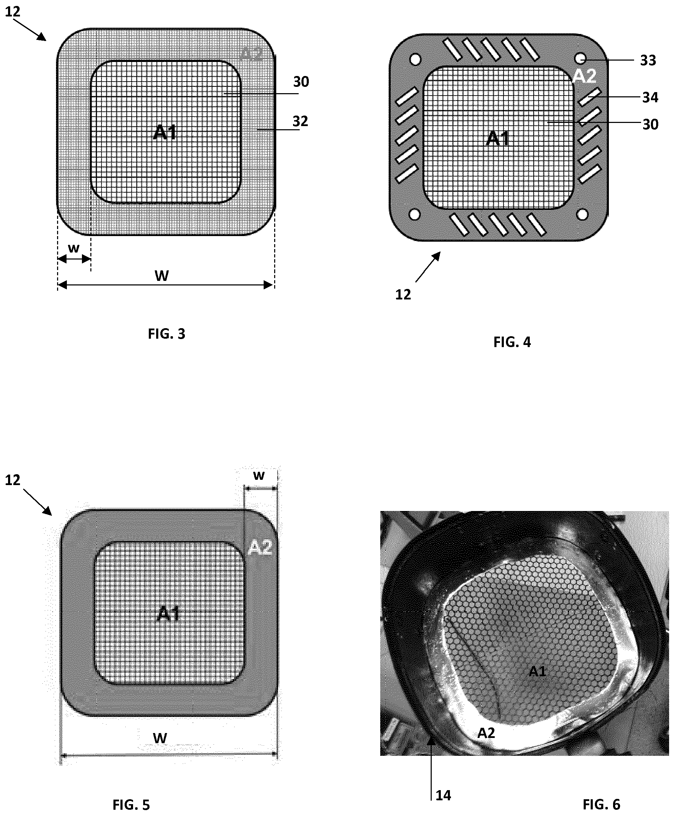

Fig. 3 shows an example of a bottom 12 of a food support 10 according to the invention, in top plan view. The bottom 12 comprises a ring shaped peripheral zone A2 and a centre zone A1 that is surrounded by said peripheral zone A2. In this embodiment, both zones A1, A2 are made of a grid material or a mesh like material. The mesh size 30 of the centre zone A1 is coarser than the mesh size 32 of the peripheral zone A2. Accordingly, the centre zone A1 has an openness factor that is larger than that of the peripheral zone A2. The average air-permeability of the centre zone A1 is larger than that of the peripheral zone A2. In the illustrated embodiment, the mesh has a constant pattern across the peripheral zone A2. Accordingly, the peripheral zone A2 will have a constant air-permeability and this constant air-permeability will be equal to the average air-permeability of the peripheral zone A2. The same is true for the centre zone A1: its mesh has a constant pattern, resulting in a constant air-permeability across the surface area of the zone A1. In other embodiments (not shown), the mesh pattern may differ, e.g. may gradually become coarser towards the centre and gradually become finer towards the perimeter of the bottom 12.

Fig. 4 shows a further example of a bottom 12 of a food support 10 according to the invention, in top plan view. In this embodiment, the centre zone A1 is again made of a mesh like material, for instance similar to the one shown in Fig. 3. The peripheral zone A2 is made of a sheet like material, provided with openings 33, 34. The openings 33, 34 may have different shapes and/or dimensions and the openings may be arranged in different patterns, as illustrated. Accordingly, the air-permeability of the peripheral zone A2 will not be constant across its entire surface area, but its average air-permeability is lower than that of the centre zone A1.

Fig. 5 shows a further example of a bottom 12 of a food support 10 according to the invention, in top plan view. In this embodiment, the centre zone A1 may be made of a mesh like material. The peripheral zone A2 is made of a closed sheet like material. In other words, the peripheral zone A2 has an openness factor of zero. The peripheral zone A2 is air-impermeable.

Fig. 6 shows a further example of a food support 10 according to the invention, in top plan view. The food support 10 comprises a bottom 12 and a wall segment 14 that entirely surrounds the bottom 12. The bottom 12 comprises a centre zone A1 and a surrounding peripheral zone A2. The centre zone A1 is made from sheet material, perforated with a regular pattern of relatively large, hexagonal openings. The openings are preferably larger than 2 mm by 2 mm and preferably smaller than 6 mm by 6 mm. They may for instance measure 5 mm by 5 mm. Of course, many other shapes, dimensions and/or patterns are possible.

The peripheral zone A2 is made of a closed sheet material. Thus, like the embodiment of Fig. 5, the peripheral zone A2 is air-impermeable. It has an openness factor of zero. In the illustrated embodiment, the peripheral zone A2 is provided as a separate component that is mounted in the food support 10 so as to lie on top of the bottom 12. In other embodiments, the peripheral zone A2 may be integrally formed with or be connected to or connectable to the centre zone A1.

In the afore-described embodiments, the peripheral zones A2 all have a substantially constant width w. This width w preferably is more than 3% of the total width W of the bottom 12, preferably more than 4%, more preferably more than 5%.

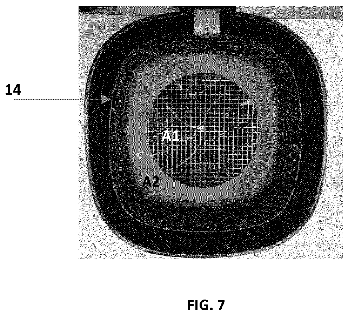

Fig. 7 shows a further example of a food support 10 according to the invention, having a bottom 12 and a wall segment 14 that surrounds the bottom 12 entirely. The bottom 12 has a configuration similar to the embodiment of Fig. 5, with a centre zone A1 that is made from a mesh material and a peripheral zone A2 that is made from a closed sheet material. The peripheral zone A2 may be provided as a separate component. Alternatively, it may form integral part of the bottom 12. The embodiment differs from the previous embodiments in that the width w of the peripheral zone A2 is not constant. Instead, the ring shaped peripheral zone A2 has a square shaped outer perimeter with rounded corners, and a circular inner perimeter. As a result, the width w gradually increases towards the corners of the peripheral zone A2.

The peripheral zones A2 of the afore-described embodiments, or at least the upper surface thereof, may be inclined downward from the outer perimeter of the food support 10 towards the centre, as illustrated in Fig. 2. The inclination angle α may for instance range between 10 and 45 degrees. This inclined surface is in particular beneficial where the peripheral zone A2 is air-impermeable or has only very small openings. Any liquids, such as water and/or fat that in use may drop down from the food onto the peripheral zone A2 will flow, under the influence of gravity, along the inclined surface towards the centre zone A2 where the liquids may be discharged from the food support 10 through the larger openings of said zone A1.

The air-permeability of the centre zone A1 and, where applicable, of the peripheral zone A2, and the surface ratios of the zones A1, A2 are selected such that the total through flow area of the bottom 12 is larger than the smallest through flow area R of the air circulation channel (see Fig. 2). Thus it is prevented that the food support 10 restricts the air flow circulation in the air-based fryer.

The above embodiments as described are only illustrative, and not intended to limit the technique approaches of the present invention. Although the present invention is described in details referring to the preferable embodiments, those skilled in the art will understand that the technique approaches of the present invention can be modified or equally displaced without departing from the spirit and scope of the technique approaches of the present invention, which will also fall into the protective scope of the claims of the present invention. In the claims, the word "comprising" does not exclude other elements or steps, and the indefinite article "a" or "an" does not exclude a plurality.

Any reference signs in the claims should not be construed as limiting the scope.

## Claims

1. A food support for use in an air-based fryer, the food support comprising:
- an air-permeable bottom for supporting food to be prepared; and
- a mounting structure for detachably mounting the food support in a food preparation chamber of the air-based fryer, such that hot air that in use is circulated in the food preparation chamber can flow through the air-permeable bottom;
wherein the air-permeable bottom comprises a peripheral zone having an average air-permeability that is lower than the average air-permeability of the remainder of the bottom.

2. The food support of claim 1, wherein the peripheral zone is air-impermeable.

3. The food support of claim 1, wherein the peripheral zone has an openness factor of less than 30%, preferably less than 20%, more preferably less than 10%.

4. The food support of anyone of the preceding claims, wherein the bottom is at least partly made of a meshed or grid material.

5. The food support of anyone of the preceding claims, wherein a width W of the peripheral zone, measured between its outer and inner perimeter, is more than 3% of the total width of the bottom, preferably more than 4%, more preferably about 5%.

6. The food support of anyone of the preceding claims, wherein the food support is a basket, with the air-permeable bottom being surrounded, at least partly, by a wall segment.

7. The food support of claim 6, wherein the width W of the peripheral zone measures between about 5% and about 50% of the height H of the wall segment.

8. The food support of anyone of the preceding claims wherein the surface area of the peripheral zone covers between about 15% and about 35% of the total surface area of the bottom.

9. The food support of anyone of the preceding claims, wherein the peripheral zone or at least its upper surface is inclined downward from the outer perimeter of the peripheral zone towards the inner perimeter.

10. The food support of anyone of the preceding claims, wherein at least a part of the air-permeable bottom is detachably connected to the food support.

11. The food support of anyone of the preceding claims, wherein the peripheral zone is formed as a separate insert.

12. The food support of anyone of the preceding claims, wherein the air-permeability or openness factor of the peripheral zone and/or the remainder of the bottom is adjustable.

13. An air-based fryer comprising a food support according to anyone of the preceding claims.

14. The air-based fryer of claim 13, comprising:
- a food preparation chamber;
- a system for circulating air inside said food preparation chamber;
- a heating element for heating the circulating air;
- an air circulation channel delimited between the food support and the food preparation chamber, for guiding the circulating air around the food support and through the air permeable bottom, wherein a total flow through area of the bottom of the food support is at least equal to the total flow through area of the smallest cross section of the air circulation channel.
